# EUROPEAN PATENT APPLICATION

(11) **EP 4 772 677 A1**
(43) Date of publication of application: **08.07.2026**
(21) Application number: 24859115.8
(22) Date of filing: 20.06.2024
(51) Int. Cl.: C25B 15/02, C25B 1/04, C25B 9/00, H02J 3/14, H02J 15/00

(54) **WATER ELECTROLYSIS SYSTEM AND METHOD FOR OPERATING WATER ELECTROLYSIS SYSTEM**

(30) Priority: 28.08.2023 JP 2023138149
(71) Applicant: Hitachi, Ltd., Tokyo 100-8280 (JP)
(72) Inventor: MIZUKAMI, Takaaki, Tokyo 100-8280 (JP); GUNJI, Akira, Tokyo 100-8280 (JP); WATANABE, Keiji, Tokyo 100-8280 (JP)
(74) Representative: Mewburn Ellis LLP
(86) International application number: PCT/JP2024/022399
(87) International publication number: WO 2025/047069

(57) **Abstract**

A water electrolysis system and a method for operating the water electrolysis system, capable of providing an adjustment capacity solely by controlling an amount of water supply are provided. A water electrolysis system which applies grid power to a plurality of water electrolysis stacks via a rectifier to provide hydrogen gas and oxygen gas as generated gas from water, and adjusts a power consumption in accordance with a command of a provision of an adjustment capacity. Upon reception of the command of the provision of the adjustment capacity in a contract timeframe in which the provision of the adjustment capacity is contracted, an amount of water supplied to the water electrolysis stack, temperature and pressure of the water electrolysis stack are made controllable in accordance with an amount of power derived from adding an amount of power for the adjustment capacity to be provided to an amount of power consumption of the water electrolysis stacks.

## Description

### Technical Field

The present invention relates to a water electrolysis system that changes a power consumption in response to a request from a supply and demand adjustment market, and a method for operating the water electrolysis system.

### Background Art

Compared with the fossil fuel, hydrogen is clean energy because of no emission of carbon dioxide during combustion. Since hydrogen has been gaining significant attention as one of clean energy sources for the purpose of taking global warming countermeasures, technological development related to production, transportation, and utilization of hydrogen is in progress. A water electrolysis system is known as one of hydrogen production processes. Due to the background as described above, the present application relates to an apparatus for mass production of hydrogen by water electrolysis using renewable energy, and a method for controlling the apparatus.

The CO₂-free hydrogen has to be produced from the renewable energy and energy source such as nuclear power. Outputs of the renewable energy like wind power and sunlight largely fluctuate over time. As increase in power generating capacity, an adjustment capacity is required for adjusting the power supply and demand balance. Meanwhile, the water electrolysis system for hydrogen production is capable of adjusting a power consumption with high amount of consumed power. Accordingly, it has been proposed to provide the adjustment capacity obtained by adjusting the amount of power consumption of the water electrolysis system.

Patent Literature 1 discloses the optimal operation of the hydrogen production apparatus and the storage battery/hydrogen storage facility upon the demand response to level fluctuation in the demand and supply balance caused by the fluctuation in outputs of the renewable energy, and to provide an adjustment capacity to the power system.

Patent Literature 2 discloses utilization of combined processes including production and storage of hydrogen, charging of the storage battery, and power generation of the fuel cell. This may easily suppress an error between an estimated value of the surplus power as a reference upon development of the electricity wheeling plan, and an actual value.

Patent Literatures 1 and 2 disclose that the fluctuation in the demand and supply balance caused by the fluctuation in outputs of the renewable energy is leveled by changing outputs of the hydrogen production apparatus and charging/discharging the storage battery such that the adjustment capacity can be provided to the power system.

### Citation List

### Patent Literature

Patent Literature 1: Japanese Unexamined Patent Application Publication No. 2019-170097
Patent Literature 2: Japanese Unexamined Patent Application Publication No.2020-54085

### Summary of Invention

### Technical Problem

Patent Literatures 1 and 2 disclose difficulties to stably operate the hydrogen production apparatus because of slow response of the output control compared with the storage battery. This results in the problem of dependence on the storage battery to handle a significant percentage of operations for controlling the adjustment capacity.

It is an object of the present invention to provide the water electrolysis system and the method for operating the water electrolysis system. The system is capable of providing the adjustment capacity solely by controlling the amount of water supply, temperature/pressure of the electrolysis stack in accordance with the hydrogen production amount required for providing the contracted adjustment capacity in the timeframe in which the adjustment capacity contracted by the supply and demand adjustment market rather than controlling optimal parameters such as the amount of water supply, temperature/pressure of the electrolysis stack in accordance with the hydrogen production amount such that the output of the water electrolysis apparatus is quickly changed to satisfy a request for a provision of the adjustment capacity.

### Solution to Problem

The present invention provides a water electrolysis system which applies grid power to a plurality of water electrolysis stacks via a rectifier to provide hydrogen gas and oxygen gas as generated gas from water, and adjusts a power consumption in accordance with a command of a provision of an adjustment capacity. Upon reception of the command of the provision of the adjustment capacity in a contract timeframe in which the provision of the adjustment capacity is contracted, an amount of water supplied to the water electrolysis stack, temperature and pressure of the water electrolysis stack are made controllable in accordance with an amount of power derived from adding an amount of power for the adjustment capacity to be provided to an amount of power consumption of the water electrolysis stacks.

The present invention provides a method for operating water electrolysis system for applying grid power to a plurality of electrolysis stacks via a rectifier to provide hydrogen gas and oxygen gas as produced gas from water, and adjusting a power consumption in accordance with a command of a provision of an adjustment capacity. Upon reception of the command of the provision of the adjustment capacity in a contract timeframe in which the provision of the adjustment capacity is contracted, an amount of water supplied to the water electrolysis stack, temperature and pressure of the water electrolysis stack are made controllable in accordance with an amount of power derived from adding an amount of power for the adjustment capacity to be provided to an amount of power consumption of the water electrolysis stacks. An available provision amount of the adjustment capacity is set such that a total sum of a bid price of the adjustment capacity for the provision and a hydrogen sales price after the provision of the adjustment capacity becomes higher than a hydrogen sales price when the adjustment capacity is not provided.

### Advantageous Effects of Invention

The present invention allows a stable control of the temperature and pressure of the water electrolysis stack upon the provision of the adjustment capacity as one of power system stabilizing measures.

### Brief Description of Drawings

Fig. 1 is a view illustrating a configuration example of a water electrolysis system according to an embodiment of the present invention.
Fig. 2 is an example of an internal block diagram of a system control unit for the water electrolysis system according to the embodiment of the present invention.
Fig. 3 is an explanatory view of an operation control for providing an upward adjustment capacity.
Fig. 4 is an explanatory view of the operation control for providing a downward adjustment capacity.
Fig. 5 is an explanatory view of the operation control for providing the upward adjustment capacity.

### Description of Embodiments

The following describes an embodiment of the present invention in detail with reference to the drawings. The respective drawings intend to provide an overview for sufficient understanding of the present invention. Consequently, the present invention is not limited only to the illustrated example. Common or equivalent components in the drawings are designated by the same reference numerals, and redundant explanations are omitted.

The following summarizes premises with respect to the water electrolysis system, based on which the embodiment of the present invention is described.

Examples of the water electrolysis stack to be used for the water electrolysis system include alkaline type, solid polymer type, anion exchange membrane type, and the like. Although the present invention is applicable to an electrolytic cell of any type, the following describes an example of the solid polymer type with excellent output responsiveness.

In the case of a generally employed water electrolysis stack, efficiency of energy conversion from electricity into hydrogen ranges from approximately 70% to 90%. The rest turns into heat to heat up components of the water electrolysis stack and water that flows inside. In the circumstance as described above, the temperature increases as water flows from upstream to downstream in the water flow path, resulting in the temperature distribution in the water electrolysis stack. The electrolytic cell of the water electrolysis stack has its resistance lower as the temperature becomes higher. Meanwhile, the temperature in excess of the heat resistant temperature will accelerate degradation of constituents of the electrolytic cell, such as the electrolyte membrane and the electrode catalyst. This may cause inconvenience such as increase in the resistance, increase in the transmission rate of hydrogen or oxygen owing to thinning of the electrolyte membrane that separates between hydrogen and oxygen, a hole generated in the electrolyte membrane, and short-circuit. If the volume ratio of the generated gas to water as the reactant is high in the flow path of the electrolytic cell, the resistance becomes high owing to shortage of water to be supplied to the electrode. As a result, the current is concentrated in the region with low volume ratio of gas. Such current concentration leads to the local temperature rise, causing degradation and failure. It is essential to suppress generation of the temperature difference or the region with high volume ratio of gas in the electrolytic cell.

Most of the heat generated in the water electrolysis stack is carried outside the water electrolysis stack with supplied water. The temperature difference generated in the water electrolysis stack along the water flow path is proportional to the heat value in the electrolytic cell, and inverse proportional to the flow rate of water. The amount of generated gas is proportional to the current. The higher the current value becomes, the higher the gas volume ratio in an outlet of the flow path becomes. In order to suppress generation of the temperature difference and the region with the high volume ratio of gas in the electrolytic cell, it is essential to supply sufficient volume of water in accordance with the current and output of the water electrolysis stack and, at the same time, to control the temperature to the one suitable for hydrogen production.

### First Embodiment

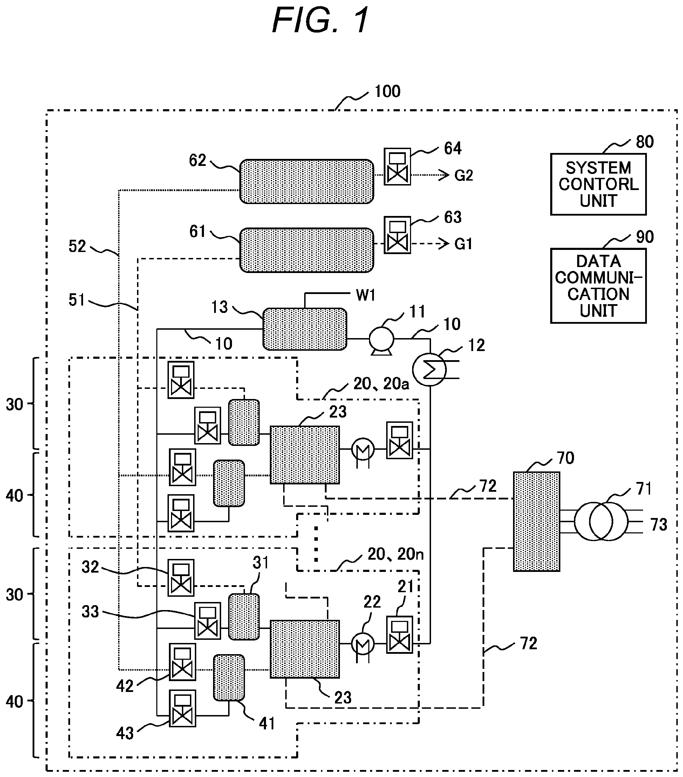

As illustrated in Fig. 1, The following describes a configuration example of a water electrolysis system 100 according to an embodiment of the present invention.

As illustrated in Fig. 1, the water electrolysis system 100 according to the embodiment of the present invention includes a water tank 13, a plurality of water electrolysis units 20 (20a, ... 20n), a hydrogen gas tank 61, an oxygen gas tank 62, a system control unit 80, and a data communication unit 90.

In the water electrolysis system 100, an isolation transformer 71 adjusts the voltage applied from a grid power 73 to isolate the water electrolysis unit 20 and the system side, and a rectifier 70 converts the AC power into the DC power such that the DC power is supplied to a water electrolysis stack 23 through a DC current cable 72 from the rectifier 70 for hydrogen production operation. In the example as illustrated in Fig. 1, a power line from the rectifier 70 is connected to the water electrolysis units 20a and 20n. The plurality of water electrolysis units 20 are connected in series-parallel to make a general largescale DC power supply applicable. The number of the series-parallel connections is not specifically limited.

The following describes main functions of the respective units as illustrated in Fig. 1, detailed explanations of which will be made later. The water tank 13 functions as a storage unit of water to be supplied to the water electrolysis unit 20. The water electrolysis unit 20 is a component for performing electrolysis of water to generate hydrogen gas and oxygen gas. The hydrogen gas tank 61 functions as a storage unit of hydrogen gas generated by the water electrolysis unit 20. The oxygen gas tank 62 functions as a storage unit of oxygen gas generated by the water electrolysis unit 20. The system control unit 80 is a component for controlling operations of the respective units of the system. The data communication unit 90 is a component for transmitting/receiving data to/from the outside. The following describes functions of the respective units in detail.

The water tank 13 as the storage unit of water to be supplied to the water electrolysis unit 20 is connected to the respective water electrolysis units 20 via a water piping 10. In the water electrolysis system 100, a water supply pump 11 increases pressure of water in the water tank 13, and cools the water in a large chiller 12 such that the water is drawn to an oxygen electrode side of the water electrolysis unit 20. In the example as illustrated in Fig. 1, the water electrolysis system 100 is configured to supply water only to the oxygen electrode side. However, the water electrolysis system 100 may be configured to supply water to both sides of the hydrogen electrode and the oxygen electrode.

Referring to the example of Fig. 1, the water electrolysis unit 20 has a flow control valve 21 and a small chiller 22 installed inside. The water electrolysis unit 20 includes the water electrolysis stack 23 which electrolyzes (performs electrolysis of) water to generate hydrogen gas and oxygen gas.

The water electrolysis unit 20 that generates hydrogen gas and oxygen gas by performing electrolysis of water includes components for a hydrogen system 30, and components for an oxygen system 40. The components for the hydrogen system 30 include a separation tank 31, a pressure control valve 32, and a drain valve 33.

The separation tank 31 is a component for separating water from hydrogen gas. The pressure control valve 32 is a valve for controlling its opening degree to feed hydrogen gas from the water electrolysis unit 20 to the hydrogen gas tank 61 via a hydrogen gas piping 51. The pressure control valve 32 functions to control its opening degree such that the internal pressure of the water electrolysis stack 23 is adjusted to a predetermined pressure. The drain valve 33 is a valve for draining water separated by the separation tank 31 to the outside. The drain valve 33 functions to control its opening degree such that the internal pressure of the water electrolysis stack 23 is adjusted to a predetermined pressure.

The water electrolysis unit 20 includes a separation tank 41, a pressure control valve 42, and a drain valve 43 as components for the oxygen-related oxygen system 40. The separation tank 41 is a component for separating water from oxygen gas. The pressure control valve 42 is a valve for controlling its opening degree to feed from the water electrolysis unit 20 to the oxygen gas tank 62 via an oxygen gas piping 52. The pressure control valve 42 functions to control its opening degree such that the internal pressure of the water electrolysis stack 23 is adjusted to a predetermined pressure. The drain valve 43 is a valve for draining water separated by the separation tank 41 to the outside of the water electrolysis stack 23. The drain valve 43 functions to control its opening degree such that the internal pressure of the water electrolysis stack 23 is adjusted to a predetermined pressure.

The water electrolysis system 100 adjusts each pressure of water separated by the separation tanks 31 and 41 to a predetermined pressure by the drain valves 33 and 43, respectively to collect the water into the water tank 13, and supplies the water to the water electrolysis stack 23 again through the water supply pump 11.

The water electrolysis system 100 opens a pressure control valve 63 to supply hydrogen gas G1 stored in the hydrogen gas tank 61 to the outside. At this time, the water electrolysis system 100 controls an opening degree of the pressure control valve 63 to a predetermined opening degree to adjust pressure of the hydrogen gas G1 to a predetermined pressure.

The water electrolysis system 100 opens a pressure control valve 64 to supply oxygen gas G2 stored in the oxygen gas tank 62 to the outside. The water electrolysis system 100 controls an opening degree of the pressure control valve 64 to a predetermined opening degree to adjust pressure of the oxygen gas G2 to a predetermined pressure.

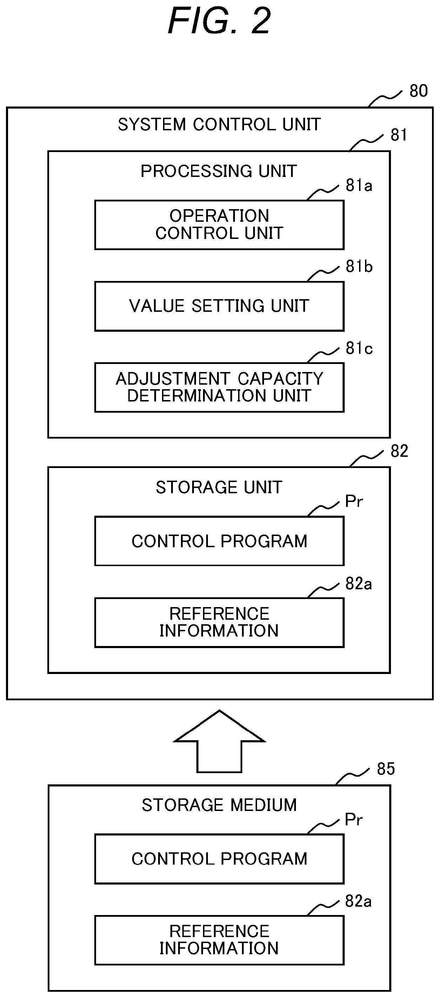

Fig. 2 is an internal block diagram of the system control unit 80. The following describes a configuration of the system control unit 80 with reference to Fig. 2.

As illustrated in Fig. 2, the system control unit 80 constituted by a computer includes a processing unit 81 and a storage unit 82. The processing unit 81 includes an operation control unit 81a, a value setting unit 81b and an adjustment capacity determination unit 81c.

The operation control unit 81a is a component for controlling the hydrogen production operation executed by the water electrolysis system 100. The value setting unit 81b is a component for setting various parameters. The adjustment capacity determination unit 81c is a component for determining amount of power to be provided as the adjustment capacity.

The storage unit 82 stores reference information 82a and a control program Pr. The reference information 82a is information to be referenced upon execution of the hydrogen production operation and setting of various parameters. The control program Pr is a program that causes the processing unit 81 to function as the operation control unit 81a, the value setting unit 81b, and the adjustment capacity determination unit 81c. The control program Pr stored in a storage medium 99 is installed directly or indirectly in the system control unit 80 from a storage medium 85.

The system control unit 80 manages data to be measured by the water electrolysis system 100, including voltage of the water electrolysis stack, voltage of the water electrolytic cell, temperature, pressure, flow rate, and current of the respective units. The system control unit 80 controls the DC power using the rectifier 70 based on an operation command, and calculates operation amounts required for stable operations of the water electrolysis stack 23 based on those data and the reference information 82a (Fig. 2) preliminarily registered in the storage unit 82 (Fig. 2). The system control unit 80 transmits control signals to the respective devices of the water electrolysis system 100 such as valves, pumps, chillers, and the like for controlling those devices.

The following describes a concept on a provision of the adjustment capacity as a premise of description with respect to the method for controlling the water electrolysis system upon the provision of the adjustment capacity. In the electricity supply and demand adjustment market, trading of the adjustment capacity is contracted by advance bidding. For example, the tertiary control may be implemented for the case where available provision amount of the adjustment capacity is contracted by bidding on the day before the real-time supply and demand, or the case where the ΔkW that allows adjustment in the week before the week of the provision (from Saturday to Friday) is contracted by bidding. In either case, upon trading of the adjustment capacity, the response interval (period of time elapsing from the issue of the command to the provision), duration, the available provision amount, and upward/downward adjustment are determined before the real-time supply and demand.

The upward adjustment denotes the provision of the adjustment capacity to cope with the shortage imbalance in the electric service area. The downward adjustment denotes the provision of the adjustment capacity to cope with the excess imbalance in the electric service area.

The water electrolysis system is normally operated under the best condition concerning the hydrogen production cost and the efficiency. However, in order to provide the adjustment capacity within the contracted response interval, it is necessary to change a power consumption of the water electrolysis system 100 within the response interval. At this time, because of slow time response, it is difficult to control the temperature change caused by variation in the heat value of the water electrolysis stack 23 as a result of change in the power consumption of the water electrolysis system 100 within the response interval.

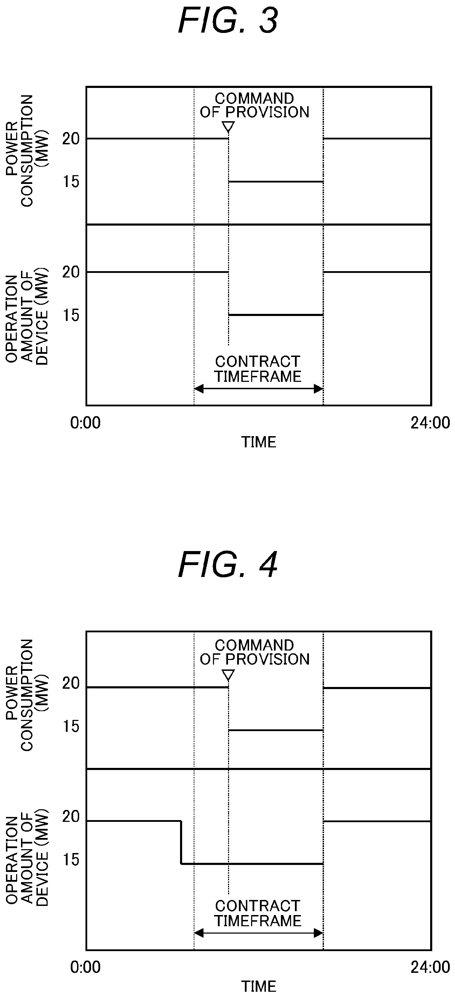

The following describes the method for controlling stable operation of the water electrolysis system 100 upon the provision of the adjustment capacity with reference to Figs. 3 to 5. Each of graphs in Figs. 3 to 5 has a horizontal axis indicating 24 hours of the day for the real-time supply and demand, and a vertical axis indicating a relation between the power consumption to be changed in accordance with the command of the provision given in the contract timeframe, and the operation amounts of device.

Fig. 3 is an explanatory view of an operation control for providing an upward adjustment capacity in the water electrolysis system 100 with a power consumption of 20 MW. During production of hydrogen by the water electrolysis stack 23 with the power consumption of 20 MW, upon reception of the command of the provision of the adjustment capacity from an adjustment market operator in the timeframe for providing the adjustment capacity of 5 MW as contracted, the system control unit 80 changes the output of the rectifier 70 (operation amount of device) from 20 MW to 15 MW, and sets the power consumption of the water electrolysis stack 23 to 15 MW such that the upward adjustment capacity of 5 MW as contracted is provided.

Based on the reference information 82a that has been preliminarily registered in the storage unit 82, the operation amount required for the stable operation of the water electrolysis stack 23 is calculated. The system control unit 80 transmits control signals to the respective devices of the water electrolysis system 100 such as valves, pumps, chillers, and the like for controlling those devices.

After the end of the timeframe for providing the adjustment capacity of 5 MW as contracted, the system control unit 80 controls the respective devices as described below to satisfy the demand for providing hydrogen. The system control unit 80 causes the value setting unit 81b to calculate the output of the rectifier 70 from the demand for providing hydrogen and the storage amount, calculates the operation amounts required for the stable operation of the water electrolysis stack 23 based on the reference information 82a preliminarily registered in the storage unit 82, and transmits control signals to the respective devices of the water electrolysis system 100 such as valves, pumps, chillers, and the like.

Fig. 3 indicates the concept as described below. The device is operated only when the command of the provision is issued in the contract timeframe such that the upward adjustment capacity of 5 MW as contracted is provided to explore the stable operation of the water electrolysis stack 23 in the new operation state. It can be said that the concept is embodied by executing a processing of reactive type in the case of a long-term contract timeframe.

Fig. 4 is an explanatory view of the operation control for providing a downward adjustment capacity in the water electrolysis system 100 with a power consumption of 20 MW. Like the case in the long-term contract timeframe as illustrated in Fig. 3, this represents the concept that brings the water electrolysis stack 23 into the stable operation condition in the new operation state before transition to the contract timeframe (accordingly, before the command of the provision is issued).

Specifically, referring to Fig. 4, prior to the timeframe for providing the adjustment capacity of 5 MW as contracted, while the water electrolysis stack 23 is producing hydrogen with the power consumption of 20 MW, the system control unit 80 changes the output of the rectifier 70 from 20 MW to 15 MW, and controls the respective devices of the water electrolysis system 100 such as valves, pumps, chillers, and the like under the condition where the water electrolysis stack 23 produces hydrogen with the power consumption of 20 WM.

Upon reception of the command of the provision of the adjustment capacity from the adjustment market operator, the system control unit 80 changes the output of the rectifier 70 from 15 MW to 20 MW, and sets the power consumption of the water electrolysis stack 23 to 20 MW to provide the downward adjustment capacity of 5 MW as contracted.

Based on the reference information 82a that has been preliminarily registered in the storage unit 82, the operation amount required for the stable operation of the water electrolysis stack 23 is calculated. The system control unit 80 transmits control signals to the respective devices of the water electrolysis system 100 such as valves, pumps, chillers, and the like for controlling those devices.

After the end of the timeframe for providing the adjustment capacity of 5 MW as contracted, the system control unit 80 controls the respective devices as described below to satisfy the demand for providing hydrogen. The system control unit 80 causes the value setting unit 81b to calculate the output of the rectifier 70 from the demand for providing hydrogen and the storage amount, calculates the operation amounts required for the stable operation of the water electrolysis stack 23 based on the reference information 82a preliminarily registered in the storage unit 82, and transmits control signals to the respective devices of the water electrolysis system 100 such as valves, pumps, chillers, and the like.

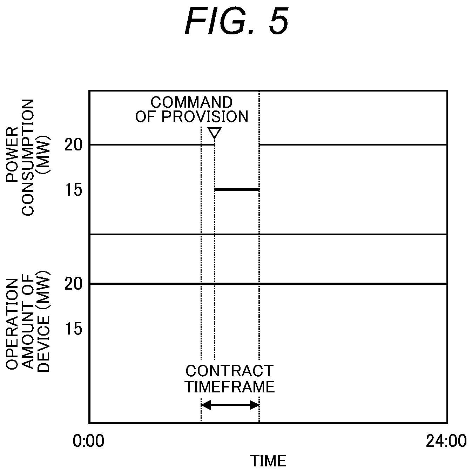

Fig. 5 illustrates the case of the short contract timeframe, indicating that, from the perspective of risk, the current state is maintained to secure higher efficiency and higher stability rather than exploring the new stabilized state (operating devices for the exploration) in accordance with the command of the provision.

Specifically, Fig. 5 illustrates another operation control for providing the upward adjustment capacity in the water electrolysis system 100 with a power consumption of 20 MW. In the timeframe for providing the adjustment capacity of 5 MW as contracted during hydrogen production by the water electrolysis stack 23 with the power consumption of 20 MW, upon reception of the command of the provision of the adjustment capacity from the adjustment market operator, the system control unit 80 changes the output of the rectifier 70 from 20 MW to 15 MW, and sets the power consumption of the water electrolysis stack 23 to 15 MW such that the upward adjustment capacity of 5 MW as contracted is provided.

If the timeframe for providing the contracted adjustment capacity is within two hours, the system control unit 80 calculates the operation amount required for the stable operation of the water electrolysis stack 23 based on the information obtained during hydrogen production by the water electrolysis stack 23 with the power consumption of 20 MW, and transmits control signals to the respective devices of the water electrolysis system 100 such as valves, pumps, chillers, and the like for controlling those devices.

After the end of the timeframe for providing the adjustment capacity of 5 MW as contracted, the system control unit 80 controls the respective devices as described below to satisfy the demand for providing hydrogen. The system control unit 80 causes the value setting unit 81b to calculate the output of the rectifier 70 from the demand for providing hydrogen and the storage amount, calculates the operation amounts required for the stable operation of the water electrolysis stack 23 based on the reference information 82a preliminarily registered in the storage unit 82, and transmits control signals to the respective devices of the water electrolysis system 100 such as valves, pumps, chillers, and the like.

As described above, the water electrolysis system 100 according to the embodiment allows suppression of change in the temperature and pressure of the water electrolysis stack 23, and stable control of the water electrolysis system 100 by providing the adjustment capacity to the supply and demand adjustment market.

It should be noted that the present invention is not limited to the embodiments described above, and includes various modification examples. For example, the above-described embodiments have been described in detail in order to facilitate the understanding of the present invention, and the present invention is not necessarily limited to those including all of the described configurations. In addition, part of the configuration of one embodiment can be replaced with the other configurations, and in addition, the configuration of the one embodiment can also be added with the configurations of other embodiments. In addition, part of each configuration can be subjected to addition, deletion, and replacement with respect to other configurations.

### List of Reference Signs

- 10:: water piping
- 11:: water supply pump
- 12:: large chiller
- 13:: water tank
- 20, 23a, 23n:: water electrolysis unit
- 21:: flow control valve
- 22:: small chiller
- 23:: water electrolysis stack
- 30:: hydrogen system
- 31:: separation tank
- 32:: pressure control valve
- 33:: drain valve
- 40:: oxygen system
- 41:: separation tank
- 42:: pressure control valve
- 43:: drain valve
- 51:: hydrogen gas piping
- 52:: oxygen gas piping
- 61:: hydrogen gas tank
- 62:: oxygen gas tank
- 63:: pressure control valve
- 64:: pressure control valve
- 70:: rectifier
- 71:: isolation transformer
- 72:: DC current cable
- 73:: grid power
- 80:: system control unit
- 81:: processing unit
- 81a:: operation control unit
- 81b:: value setting unit
- 81c:: adjustment capacity determination unit
- 82:: storage unit
- 82a:: reference information
- 85:: storage medium
- 90:: data communication unit
- 100:: water electrolysis system
- G1:: hydrogen gas
- G2:: oxygen gas
- W1:: water
- Pr:: control program

## Claims

1. A water electrolysis system which applies a grid power to a plurality of water electrolysis stacks via a rectifier to generate hydrogen gas and oxygen gas as generated gas from water, and adjusts a power consumption in accordance with a command of a provision of an adjustment capacity,
wherein upon reception of the command of the provision of the adjustment capacity in a contract timeframe in which the provision of the adjustment capacity is contracted, an amount of water supplied to the water electrolysis stack, a temperature and a pressure of the water electrolysis stack are made controllable in accordance with an amount of power derived from adding an amount of power of the adjustment capacity to be provided to an amount of power consumption of the water electrolysis stack.

2. The water electrolysis system according to claim 1,
wherein in an interval in which the command of the provision of the adjustment capacity is not received, the amount of water supplied to the water electrolysis stack, the temperature and the pressure of the water electrolysis stack are controlled in accordance with a suitable amount of power consumption of the water electrolysis stack.

3. The water electrolysis system according to claim 1, wherein: before the contract timeframe in which the provision of the adjustment capacity is contracted, the amount of water supplied to the water electrolysis stack, the temperature and the pressure of the water electrolysis stack are controlled in accordance with the amount of power derived from adding the amount of power of the adjustment capacity to be provided to the amount of power consumption of the water electrolysis stack; and
upon subsequent reception of the command of the provision of the adjustment capacity, an amount of power consumption of the water electrolysis stack is increased by an amount equal to an amount of power contracted to be provided.

4. The water electrolysis system according to claim 1, wherein:
upon reception of the command of the provision of the adjustment capacity in a timeframe in which a contracted upward adjustment capacity is provided, the amount of power consumption of the water electrolysis stack is reduced by an amount equal to an amount of power contracted to be provided; and
in the case where the timeframe in which the adjustment capacity is provided is short, the amount of water supplied to the water electrolysis stack, the temperature and the pressure of the water electrolysis stack are controlled in accordance with an amount of power consumption before changing the power consumption of the water electrolysis stack.

5. The water electrolysis system according to claim 4, wherein:
upon reception of the command of the provision of the adjustment capacity in the timeframe in which the contracted upward adjustment capacity is provided, the amount of power consumption of the water electrolysis stack is reduced by the amount equal to the amount of power contracted to be provided; and
in the case where the timeframe in which the adjustment capacity is provided is within two hours, the amount of water supplied to the water electrolysis stack, the temperature and the pressure of the water electrolysis stack are controlled in accordance with the amount of power consumption before changing the power consumption of the water electrolysis stack.

6. A method for operating water electrolysis system, the method comprising the steps:
applying a grid power to a plurality of electrolysis stacks via a rectifier to generate hydrogen gas and oxygen gas as generated gas from water; and
adjusting power consumption in accordance with a command of a provision of an adjustment capacity, wherein:
upon reception of the command of the provision of the adjustment capacity in a contract timeframe in which the provision of the adjustment capacity is contracted, an amount of water supplied to the water electrolysis stack, temperature and pressure of the water electrolysis stack are made controllable in accordance with an amount of power derived from adding an amount of power of the adjustment capacity to be provided to an amount of power consumption of the water electrolysis stack; and
an available provision amount of the adjustment capacity is set to allow a total sum of a bid price of the adjustment capacity to be provided and a hydrogen sales price after the provision of the adjustment capacity to be higher than a hydrogen sales price when the adjustment capacity is not provided.

7. The method for operating water electrolysis system according to claim 6,
wherein the available provision amount of the adjustment capacity is set by monitoring a hydrogen storage capacity to allow a hydrogen supply capacity of the water electrolysis system satisfies a demand for a provision of hydrogen.
